# EUROPEAN PATENT APPLICATION

(11) **EP 4 836 029 A1**
(43) Date of publication of application: **04.11.2026**
(21) Application number: 26174005.4
(22) Date of filing: 22.04.2026
(51) Int. Cl.: H01M 8/00, H01M 8/2465

(54) **PRESS DIE**

(30) Priority: 02.05.2025 JP 2025076530
(71) Applicant: Toyota Jidosha Kabushiki Kaisha, Toyota-shi, Aichi-ken 471-8571 (JP)
(72) Inventor: SAKAMOTO, Takahiro, Toyota-shi, 471-8571 (JP)
(74) Representative: J A Kemp LLP

(57) **Abstract**

A press die used in manufacturing a cell for a fuel cell stack, the cell including a membrane electrode assembly, a frame for holding the membrane electrode assembly, and a separator, the frame and separator are bonded together by an adhesive, the press die is used for bonding the separator, adhesive, and frame together, by pressurizing the separator, adhesive, and frame, in a heated state, and is provided with a pressing face that comes into contact with the separator during the pressurization and that is situated along an edge of the frame, viewing the separator and the frame along a pressurization direction in which the frame and the separator are overlaid, the pressing face includes groove portions that extend along the edge portion of the frame, and are situated on at least part of the edge portion of the frame, viewing the separator and the frame along the pressurizing direction.

## Description

### BACKGROUND OF THE INVENTION

### 1. Field of the Invention

The present disclosure relates to a press die.

### 2. Description of Related Art

As described in Japanese Unexamined Patent Application Publication No. 2021-141005 (JP 2021-141005 A), when manufacturing cells for a fuel cell stack, separators are bonded to a resin frame while being heated and pressurized by a die. Note that for this bonding, a thermoplastic adhesive is used.

### SUMMARY OF THE INVENTION

The surface of the die used to pressurize the separator may have minute unevenness due to limitations in processing precision. Further, the surface of the die may be deformed by thermal expansion caused by heating during pressurization, resulting in unevenness on the surface of the die.

During a process of the pressurization, air inside the adhesive or at an interface of the separator and the adhesive may not be completely expelled. In particular, when a recess is formed in the surface of the die, the air at the portion of the separator facing the recess is subjected to less pressure than the air at other portions, and is therefore not expelled as readily. The air that is not expelled remains as air bubbles, which hinders adhesion of the separator and the adhesive to each other. This has led to a problem of bonding defects of the separator and the resin frame.

The present disclosure can be realized in the following aspects.
(1) According to one aspect of the present disclosure, there is provided a press die used in manufacturing a cell for a fuel cell stack. In this press die, the cell includes a membrane electrode assembly, a frame for holding the membrane electrode assembly, and a separator that is disposed so as to be overlaid on the membrane electrode assembly held by the frame, and the frame, the frame and the separator are bonded together by an adhesive, the press die is used for bonding the separator, the adhesive, and the frame together, by pressurizing the separator, the adhesive, and the frame, in a heated state, and is provided with a pressing face that comes into contact with the separator during the pressurization, and that is situated along an edge portion of the frame, when viewing the separator and the frame disposed at the press die along a pressurizing direction that is a direction in which the frame and the separator are overlaid, and the pressing face includes one or more groove portions that extend along the edge portion of the frame, and that are situated on at least part of the edge portion of the frame, when viewing the separator and the frame disposed at the press die along the pressurizing direction.

In such an aspect, due to the strong pressurization of the periphery thereof, the portion of the separator facing the groove portion rises relative thereto. This increases contact area between the separator and the adhesive, thereby suppressing bonding defects. Accordingly, the press die can suppress occurrence of bonding defects between the separator and the frame as compared to using a press die having a flat pressing face.

(2) In the press die according to the above aspect, the fuel cell stack may include a plurality of cells stacked along the pressurizing direction, and the cells in a stacked state may be subjected to pressure in the pressurizing direction by the press die, each of the separator and the frame may further include a manifold hole that opens in the pressurizing direction and that is situated so as to overlay each other, when viewing the separator and the frame along the pressurizing direction, the cell may further include a gasket that is disposed on the separator so as to be situated between each of the cells in the stacked state, and that is disposed in a first portion including part of an edge portion of the manifold hole, the gasket may be subjected to pressure in the pressurizing direction in the stacked state, and the one or more groove portions may be provided such that the one or more groove portions are situated in a second portion of the edge portion of the manifold hole, that is part of the edge portion of the manifold hole other than the first portion, when viewing the separator and the frame disposed at the press die along the pressurizing direction.

In such an aspect, the gasket is subjected to pressure in a state in which the cells are stacked. Thus, the first portion of the separator where the gasket is disposed is subjected to the pressure. On the other hand, the second portion where the gasket is not disposed is less readily subjected to the pressure. That is to say, the separator and the frame are more likely to separate from each other in the second portion where the gasket is not disposed than in the first portion where the gasket is disposed. However, with the press die, bonding defects can be suppressed from occurring in the second portion, by situating the groove portion in the second portion.

(3) In the press die of the above aspect, the one or more groove portions may be made up of one groove.

According to such an aspect, when there is one groove portion, the pressure applied to the separator may be less dispersed than when there are two or more grooves. Thus, the press die may be able to suppress bonding defects between the separator and the frame, as compared to a form in which the grooves portion is made up of two or more grooves.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view illustrating a schematic configuration of a fuel cell stack;
FIG. 2 is an explanatory diagram in which a cell is disassembled;
FIG. 3 is an explanatory diagram illustrating a range of a separator that is pressurized by a pressing face;
FIG. 4 is a cross-sectional view taken along line IV-IV in FIG. 3;
FIG. 5 is a process chart showing a manufacturing method of a cell for a fuel cell;
FIG. 6 is an enlarged cross-sectional view of an adhesive portion of FIG. 4 when pressurized; and
FIG. 7 is an explanatory diagram illustrating a press die according to a second embodiment.

### DETAILED DESCRIPTION OF EMBODIMENTS

### A. First Embodiment

### A-1. Configuration of Cell for Fuel Cell:

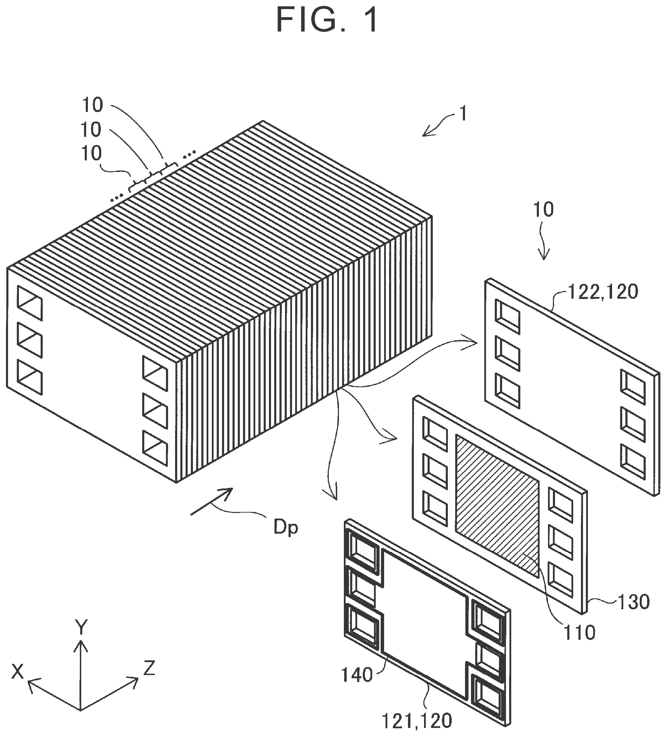

FIG. 1 is a perspective view illustrating a schematic configuration of a fuel cell stack 1. A fuel cell according to an embodiment is a solid polymer-based fuel cell that generates electricity by receiving supply of hydrogen and oxygen as reactant gases. The fuel cell stack 1 that the fuel cell is equipped with is made up by stacking a plurality of cells 10.

In FIG. 1, an XYZ Cartesian coordinate system is defined in order to describe the structure of the fuel cell stack 1. In FIG. 1, an X-axis direction is a direction following the long sides of the cell 10. A Y-axis direction is a direction following the short sides of the cell 10. A Z-axis direction is a thickness direction of the cell 10, and is a direction in which the cells 10 are stacked. That is to say, the Z-axis direction is a direction in which a frame 130 and a separator 120 are overlaid. Note that of the Z-axis directions, a +Z direction is also a direction in which the cell 10 receives pressure from a press die 20 when the cell 10 is manufactured. The +Z direction is also a direction in which the cells 10 are subjected to pressure to make up the fuel cell stack 1. Hereinafter, the +Z direction will be referred to as "pressurizing direction Dp".

That is to say, the fuel cell stack 1 has a plurality of cells 10 stacked along the pressurizing direction Dp. Further, the fuel cell stack 1 is configured so as to be in a state of being subjected to pressure in the pressurizing direction Dp in a state of being stacked. Specifically, the fuel cell stack 1 is configured so as to be in a state of being subjected to pressure in the pressurizing direction Dp by being fastened in the pressurizing direction Dp by fastening members that are omitted from illustration.

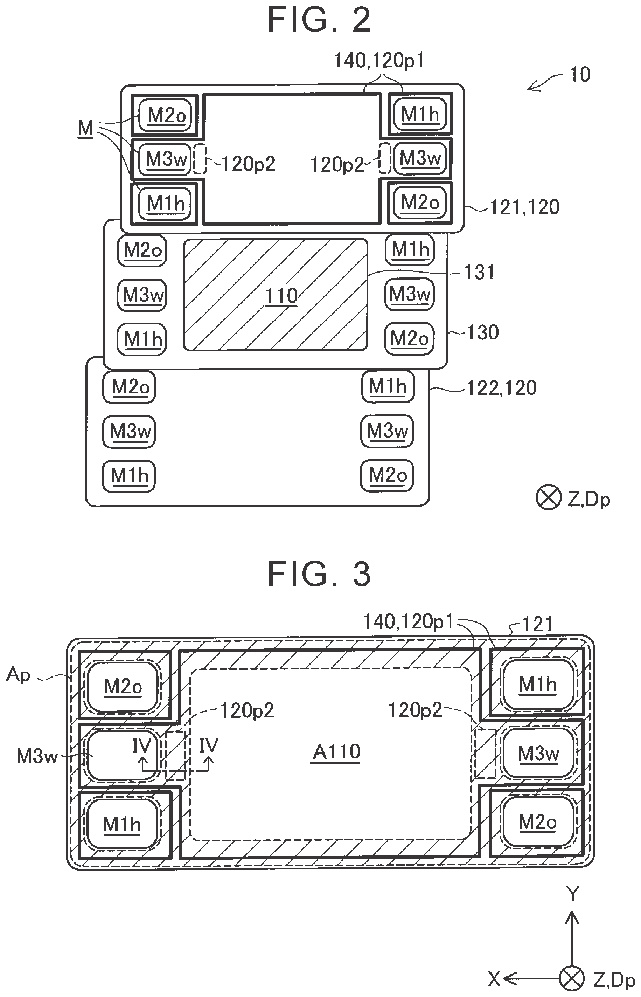

FIG. 2 is an explanatory diagram in which the cell 10 is disassembled. The cell 10 includes a membrane electrode assembly (MEA) 110, the frame 130, the separator 120, and a gasket 140. The frame 130 is also referred to as "resin sheet 130". Note that in an actual cell 10, the membrane electrode assembly 110, the frame 130, and the separator 120 are stacked such that outer shapes thereof match. However, in order to facilitate understanding of the technology, FIG. 2 illustrates a state in which positions of the components in the XY plane in FIG. 1 are shifted.

The membrane electrode assembly 110 (see the middle center part of FIG. 2 ) includes an electrolyte membrane, a cathode electrode formed on one side of the electrolyte membrane, an anode electrode formed on the other side of the electrolyte membrane, a gas diffusion layer formed on a face of the cathode electrode on a side that is not in contact with the electrolyte membrane, and a gas diffusion layer formed on a face of the anode electrode on a side that is not in contact with the electrolyte membrane. Note that in FIG. 2, illustration of each component is omitted. The electrolyte membrane is made of, for example, an ion exchange membrane made of a fluororesin. The anode electrode is an electrode on a side to which anode gas is supplied. The cathode electrode is an electrode on a side to which cathode gas is supplied. The anode electrode and the cathode electrode are made of, for example, a carbon carrier carrying a platinum catalyst. The gas diffusion layer is made of, for example, carbon cloth. Note that the anode gas is hydrogen gas. The cathode gas is air.

The separator 120 is a conductive member that forms a channel for the anode gas or the cathode gas. The separator 120 is made up of a first separator 121 (see upper part of FIG. 2) and a second separator 122 (see lower part of FIG. 2). The first separator 121 forms a channel for the anode gas. The second separator 122 forms a channel for the cathode gas. The separator 120 is formed, for example, from a carbon member made of dense carbon, which is made to be gas impermeable by compressing carbon. Note that in FIG. 2, the uneven shapes, formed on the surface of the separator 120 to form channels for the reactant gasses and channels for coolant, are omitted from illustration.

The separator 120 is a rectangular plate-like member. The outer shape of the separator 120 is the same as that of the frame 130. This enables the separator 120 to clamp the membrane electrode assembly 110 held by the frame 130 between the first separator 121 and the second separator 122. That is to say, the separator 120 is disposed so as to overlay the membrane electrode assembly 110 held by the frame 130, and the frame 130.

The frame 130 (see middle part of FIG. 2) holds the membrane electrode assembly 110. More specifically, the frame 130 is a casing formed in a rectangular shape, having an opening 131 in the middle thereof. Hereinafter, the portion of the frame 130 that makes up the casing will be referred to as "edge portion". The frame 130 holds the membrane electrode assembly 110 in the opening 131 at the middle thereof. The frame 130 is made of, for example, a thermoplastic resin. More specifically, polyethylene terephthalate (PET) is used as the material making up the frame 130. However, various other thermoplastic resins, such as polypropylene, polyethylene, and so forth, may also be used.

The frame 130 and the separator 120 are bonded together by a thermoplastic adhesive Ad in a state of making up the cell 10. The adhesive Ad is, for example, thermoplastic polypropylene (PP). However, the adhesive Ad may be ethylene propylene rubber. Note that "adhesion of separator 120 and frame 130" means a state in which the separator 120, the adhesive Ad, and the frame 130 are heated and pressurized, causing a chemical reaction of the adhesive Ad between the surface of the frame 130 and the surface of separator 120, resulting in the formation of hydrogen bonds and covalent bonds, thereby bonding the frame 130 and the separator 120.

Each of the separator 120 and the frame 130 has manifold holes M opened in the pressurizing direction Dp. The manifold holes M are through holes for allowing gas and coolant to flow among the cells 10 that make up the fuel cell stack 1. That is to say, the manifold holes M of the separator 120 and the frame 130 are situated so as to overlay each other when the separator 120 and the frame 130 are viewed along the pressurizing direction Dp. Thus, the manifold holes M communicate in the pressurizing direction Dp to form channels. The manifold holes M are further classified into first manifold holes M1h, second manifold holes M2o, and third manifold holes M3w.

The first manifold holes M1h allow the anode gas to flow through the membrane electrode assembly 110. That is to say, the first manifold holes M1h are used to supply and discharge the anode gas to and from the membrane electrode assembly 110. The second manifold holes M2o allow the cathode gas to flow through the membrane electrode assembly 110. That is to say, the second manifold holes M2o are used to supply and discharge the cathode gas to and from the membrane electrode assembly 110. The third manifold holes M3w allow the coolant to flow through the separator 120. That is to say, the third manifold holes M3w are used to supply and discharge coolant to and from the separators 120 provided for each of the cells 10.

The various types of manifold holes are each provided in pairs, one for supply and one for discharge, at peripheral portions of the separator 120 and the frame 130. For example, in the first separator 121 of FIG. 2, one of the right and left first manifold holes M1h is a manifold hole M for supplying anode gas, and the other is a manifold hole M for discharging the anode gas. The manifold holes M for supplying and the manifold holes M for discharging are also included in each of the second manifold holes M2o and the third manifold holes M3w, as well. The gas and coolant pass through the corresponding channels in the cell 10 via the manifold holes M for supplying and the manifold holes M for discharging.

The gasket 140 has a function of sealing off space between two cells 10 that are adjacent to each other, by being clamped between the surfaces of the two cells 10, in a state in which the cells 10 are stacked. Accordingly, the gasket 140 is made of, for example, an elastic material such as rubber, resin, or the like.

The gasket 140 is disposed on the separator 120 so as to be situated between each of the cells 10 in a state in which the cells 10 are stacked. More specifically, the gasket 140 is disposed on the surface of the first separator 121 opposite to the surface thereof facing the frame 130. Further, the gasket 140 is disposed along the edge portions of the manifold holes M in a first portion 120p1 that includes part of the edge portions of the manifold holes M. More specifically, the gasket 140 is disposed so as to surround the periphery of each of the first manifold holes M1h and the second manifold holes M2o. Further, the gasket 140 is disposed on another portion, which is a portion of the edge portions of the third manifold holes M3w excluding a part on a side thereof facing the middle of the separator 120. This other portion is part of the edge portions of the manifold holes M in the separator 120 other than the first portions 120p1, and will be referred to as "second portion 120p2". In FIG. 2, the second portions 120p2 are portions surrounded by dashed lines. In a state in which the cells 10 are stacked, the gasket 140 is subjected to pressure in the pressurizing direction Dp, thereby suppressing gas flowing through the manifold hole M from leaking between each of the cells 10 that are stacked.

### A-2. Configuration of Press Die 20:

The press die 20 is used to manufacture the cells 10 of the fuel cell stack 1. More specifically, the press die 20 is used to bond the separator 120, the adhesive Ad, and the frame 130 together by pressurizing the separator 120, the adhesive Ad, and the frame 130 in a heated state. For example, the press die 20 is heated by a heater, and pressurizes the separator 120, the adhesive Ad, and the frame 130 in a heated state. Accordingly, the press die 20 is made of a metal material that has a small coefficient of thermal expansion and that is also highly durable. For example, the press die 20 is made of stainless steel.

FIG. 3 is an explanatory diagram illustrating a range of the separator 120 that is pressurized by a pressing face 21. FIG. 3 illustrates the surface of the first separator 121 when the cell 10 disposed in the press die 20 is viewed along the pressurizing direction Dp. A membrane electrode assembly range A110 represents a range of the membrane electrode assembly 110 situated on the opposite side of the surface of the first separator 121 that is illustrated. A pressurizing range Ap, indicated by hatching, is a range of the surface of the first separator 121 other than the membrane electrode assembly range A110. That is to say, the pressurizing range Ap is a range along the edge portion of the frame 130.

The press die 20 has the pressing face 21. The pressing face 21 is, among the surfaces of the press die 20, a face that comes into contact with the separator 120 when pressurizing. Note that in the present embodiment, when pressurizing, the pressing face 21 comes into contact with the first separator 121, from among the first separator 121 and the second separator 122. Viewing the separator 120 and the frame 130 along the pressurizing direction Dp, the pressing face 21 is situated along the edge portion of the frame 130, as in the pressurizing range Ap, when pressurizing.

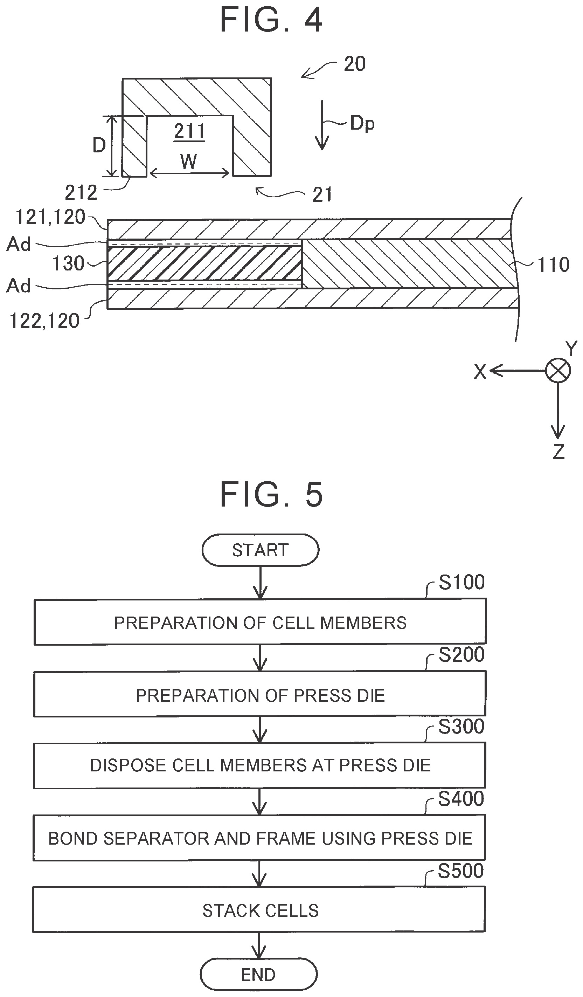

FIG. 4 is a cross-sectional view taken along line IV-IV in FIG. 3. In FIG. 4, the press die 20 is illustrated immediately prior to pressurizing, in order to indicate a positional relation between the press die 20 and the separator 120. The pressing face 21 has one groove portion 211. Specifically, the groove portion 211 is provided extending along the edge portion of the frame 130, when viewing the separator 120 and the frame 130 disposed at the press die 20 along the pressurizing direction Dp. Accordingly, a cross-section perpendicular to the direction in which the groove portion 211 extends is as illustrated in FIG. 4.

However, the groove portion 211 is not situated over the entire edge portion of the frame 130, but is situated only on a part of the edge portion of the frame 130. More specifically, when viewing the separator 120 and the frame 130 disposed at the press die 20 along the pressurizing direction Dp, the groove portion 211 is situated in the second portion 120p2 (see FIG. 3) of the edge portion of the manifold hole M in the separator 120 where the gasket 140 is not disposed.

Note that the "one" in "one groove portion 211" refers to the number of grooves disposed in parallel. That is to say, this does not mean the number of places where the groove portions 211 are provided on the entire pressing face 21. In the present embodiment, the groove portions 211 are situated in two places in the second portions 120p2, but the number of grooves in each place is one.

As illustrated in FIG. 4, the groove portion 211 is configured as a substantially rectangular void when viewed in a cross-section perpendicular to the direction in which the groove portion 211 extends. The depth D of the groove portion 211 is, for example, several tens of µm. The width W of the groove portion 211 is, for example, several mm. The groove portion 211 is formed by laser beam machining, for example. Note, however, that the groove portion 211 may be formed by cutting.

### A-3. Manufacturing Method of Cell for Fuel Cell:

FIG. 5 is a process chart showing a manufacturing method of the cell 10 for the fuel cell. The manufacturing method the cell 10 will be described below. Note that in the following description, the entity performing the work is a person, but may be performed by a robot as well.

In step S100 of FIG. 5, a worker prepares members of the cell 10. More specifically, the worker prepares the membrane electrode assembly 110, the frame 130, the separator 120, and the gasket 140. Note that the frame 130 that is prepared is in a state of holding the membrane electrode assembly 110. Further, the gasket 140 is in a state of having been disposed on the first separator 121 that is prepared.

In step S200 of FIG. 5, the worker prepares the press die 20. That is to say, the worker attaches the press die 20 to a press.

In step S300 of FIG. 5, the worker disposes the members of the cell 10 at the press die 20. More specifically, the worker disposes the frame 130 and the separators 120 at the press die 20, in a state in which the frame 130 is clamped between the first separator 121 and the second separator 122. Note that the worker disposes the separators 120 and the frame 130 in the press die 20 in a state in which the adhesive Ad is applied between the frame 130 and the first separator 121, and between the frame 130 and the second separator 122, respectively.

In step S400 of FIG. 5, the worker bonds the separators 120 and the frame 130 together. That is to say, the worker pressurizes the separators 120 with the pressing face 21 in a state in which the press die 20 is heated, thereby bonding the separators 120 and the frame 130 together.

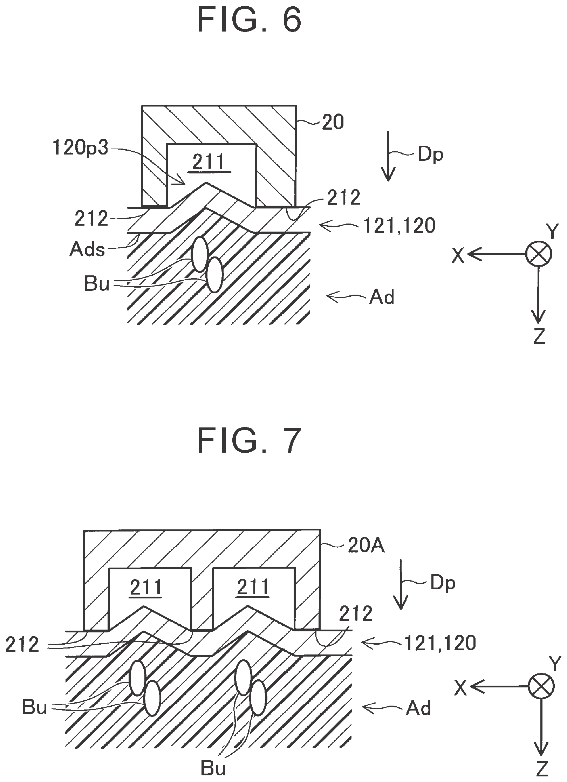

FIG. 6 is an enlarged cross-sectional view of the adhesive Ad portion in FIG. 4 when pressurizing. FIG. 6 is a cross-sectional view perpendicular to the direction in which the groove portion 211 extends, in the same way as FIG. 4. When pressurizing by the press die 20, a portion 212 of the pressing face 21 other than the groove portion 211 comes into contact with the separator 120, thereby pressurizing the separator 120. Further, heating by the press die 20 promotes a chemical reaction of the adhesive Ad between the frame 130 and the separator 120, thereby bonding the frame 130 and the separator 120 together.

Further, in the groove portion 211, when pressurizing, the pressure that a portion 120p3 of the separator 120 facing the groove portion 211 is subjected to is lower than that the periphery is subjected to. When air is contained in the adhesive Ad that is pressurized through the separator 120, the air moves from a high pressure portion to a low pressure portion, due to the pressurization. Accordingly, the air contained in the adhesive Ad near the portion 120p3 of the separator 120 facing the groove portion 211 is not likely to move to the periphery thereof. That is to say, in the portion 120p3 of the separator 120 facing the groove portion 211, more air remains than in the periphery thereof, and air bubbles are more likely to form. As a result, there is a possibility that many air bubbles will be formed at an interface Ads of the separator 120 and the adhesive Ad, as well. When air bubbles are situated at this interface Ads, the contact area between the separator 120 and the adhesive Ad is reduced, and accordingly bonding defects are more likely to occur. However, the adhesive Ad near the portion 120p3 of the separator 120 facing the groove portion 211 rises relative to the periphery, due to the strong pressurization thereat. As a result, the separator 120 facing the groove portion 211 bulges, increasing the surface area thereof, and while air bubbles form more readily in this portion 120p3, the contact area between the separator 120 and the adhesive Ad also increases. This suppresses bonding defects from occurring. Note that since the periphery of this portion 120p3 is strongly pressurized, air is less likely to remain there, thereby making it difficult for air bubbles to form. That is to say, the occurrence of bonding defects is also suppressed in the periphery of this portion 120p3.

Note that the portion 120p3 of the separator 120 facing the groove portion 211 is not in direct contact with the pressing face 21 and is therefore less likely to be heated as compared to the other portions of the separator 120 that are in contact with the pressing face 21. However, the portion 120p3 of the separator 120 facing the groove portion 211 is also heated by heat conveyed from the periphery thereof. Accordingly, the adhesive Ad situated at that portion 120p3 also bonds the frame 130 and the separator 120 together.

In step S500 of FIG. 5, the worker stacks the cells 10 with the separators 120 and the frames 130 bonded together. Further, the worker fastens together the cells 10 that are stacked in the pressurizing direction Dp using fastening members. Thus, the manufacturing of the fuel cell stack 1 is completed.

In the first embodiment described above, the groove portion 211 is situated along the edge portions of the frame 130 when pressurizing. When pressurizing, the pressure applied to the portion 120p3 of the separator 120 facing the groove portion 211 is lower than that of the periphery thereof. When air is contained in the adhesive Ad that is pressurized through the separator 120, the air moves from a high pressure portion to a low pressure portion, due to the pressurization. Accordingly, the air contained in the adhesive Ad near the portion 120p3 of the separator 120 facing the groove portion 211 is not likely to move to the periphery thereof. That is to say, in the portion 120p3 of the separator 120 facing the groove portion 211, more air remains than in the periphery thereof, and air bubbles are more likely to form. As a result, there is a possibility that many air bubbles will be formed at the interface Ads of the separator 120 and the adhesive Ad, as well. When air bubbles are situated at this interface Ads, the contact area between the separator 120 and the adhesive Ad is reduced, and accordingly bonding defects are more likely to occur. However, the portion 120p3 of the separator 120 facing the groove portion 211 rises relative to the periphery, due to the strong pressurization thereat. As a result, the separator 120 facing the groove portion 211 bulges, increasing the surface area thereof, and while air bubbles form more readily in this portion 120p3, the contact area between the separator 120 and the adhesive Ad also increases. This suppresses bonding defects. Note that since the periphery of this portion 120p3 is strongly pressurized, air is less likely to remain there, thereby making it difficult for air bubbles to form. That is to say, bonding defects are less likely to occur. Accordingly, the press die 20 according to the present embodiment can suppress the occurrence of bonding defects between the separator 120 and the frame 130 more than a press die 20 having a pressing face 21 that is flat.

Further, in the first embodiment, the gasket 140 is subjected to pressure in a state in which the cells 10 are stacked. Thus, the first portion 120p1 of the separator 120 where the gasket 140 is disposed is subjected to the pressure. On the other hand, the second portion 120p2 where the gasket 140 is not disposed is less readily subjected to the pressure. That is to say, the separator 120 and the frame 130 are more likely to separate from each other in the second portion 120p2 where the gasket 140 is not disposed than in the first portion 120p1 where the gasket 140 is disposed. However, the press die 20 according to the present embodiment can suppress bonding defects from occurring in the second portion 120p2, by positioning the groove portion 211 in the second portion 120p2.

Furthermore, in the first embodiment, the groove portion 211 is configured as one groove. Accordingly, when there is one groove portion 211, the pressure applied to the separator 120 may be less dispersed than when there are two or more grooves. That is to say, the portion 120p3 of the separator 120 facing the groove portion 211 is raised more than in a form in which the groove portion 211 is made up of two or more grooves. Accordingly, bonding defects are more likely to be suppressed. Thus, the press die 20 according to the present embodiment may be able to suppress bonding defects between the separator 120 and the frame 130 in some cases, as compared to a form in which the groove portion 211 is made up of two or more grooves.

### B. Second Embodiment:

FIG. 7 is an explanatory diagram illustrating a press die 20A according to a second embodiment. FIG. 7 illustrates the press die 20A according to the second embodiment in the same cross-sectional view of the cell 10 as in FIG. 6. In the above embodiment, there is one groove portion 211. However, the number of groove portions 211 may be, for example, two or three, as long as it is one or more. Note that the two or more groove portions 211 are configured being arrayed in parallel and extending along the edge portion of the frame 130. For example, in two groove portions 211, the voids are configured so as to be adjacent to each other in a cross-section perpendicular to the direction in which the groove portions 211 extend, as illustrated in FIG. 7.

### C. Other Embodiments:

C1
   In the above embodiment, the groove portion 211 is formed of a substantially rectangular void in a cross-section perpendicular to the direction in which the groove portion 211 extends. However, the shape of the void is not limited to a substantially rectangular shape. The shape of the void may be an substantially triangular or semicircular void.
C2
   In the above embodiment, the one or more groove portions 211 are situated on a part of the edge portion of the frame 130, when viewing the separator 120 and the frame 130 disposed at the press die 20 along the pressurizing direction Dp. However, one or more groove portions 211 may be situated on the entirety of the edge portion of the frame 130. That is to say, it is sufficient that one or more groove portions 211 are situated on at least a part of the edge portion of the frame 130.
C3
   In the above embodiment, one or more groove portions 211 are situated at the second portion 120p2 where the gasket 140 is not disposed, when viewing the separator 120 and the frame 130 disposed at the press die 20 along the pressurizing direction Dp. However, one or more groove portions 211 may be situated in the first portion 120p1 where the gasket 140 is disposed. More specifically, one or more groove portions 211 may be situated along the first portion 120p1 near, but not overlapping, the gasket 140.
C4
   In the above embodiment, the pressing face 21 comes into contact with the first separator 121, out of the first separator 121 and the second separator 122, when pressurizing. However, the pressing face 21 may come into contact with the second separator 122, out of the first separator 121 and the second separator 122, when pressurizing. That is to say, the press die 20 may pressurize the separators 120 from the second separator 122 side.
C5
   In the above embodiment, the gasket 140 is disposed on the first separator 121. However, the gasket 140 may be disposed on the second separator 122 instead of being disposed on the first separator 121.

The present disclosure is not limited to the embodiments above, and can be realized through various configurations without departing from the scope thereof. For example, the technical features of the embodiments corresponding to the technical features in each mode described in the section SUMMARY OF THE INVENTION can be replaced or combined appropriately to solve part or all of the above issues, or to achieve part or all of the above effects. Also, when the technical features are not described as being essential in the present specification, the technical features can be deleted as appropriate.

## Claims

1. A press die used in manufacturing a cell for a fuel cell stack, wherein
the cell includes
a membrane electrode assembly,
a frame for holding the membrane electrode assembly, and
a separator that is disposed so as to be overlaid on the membrane electrode assembly held by the frame, and the frame,
the frame and the separator are bonded together by an adhesive,
the press die
is used for bonding the separator, the adhesive, and the frame together, by pressurizing the separator, the adhesive, and the frame, in a heated state, and
is provided with a pressing face that comes into contact with the separator during the pressurization, and that is situated along an edge portion of the frame, when viewing the separator and the frame disposed at the press die along a pressurizing direction that is a direction in which the frame and the separator are overlaid, and
the pressing face includes
one or more groove portions that extend along the edge portion of the frame, and that are situated on at least part of the edge portion of the frame, when viewing the separator and the frame disposed at the press die along the pressurizing direction.

2. The press die according to claim 1, wherein
the fuel cell stack includes a plurality of cells stacked along the pressurizing direction, and the cells in a stacked state are subjected to pressure in the pressurizing direction by the press die,
each of the separator and the frame further includes a manifold hole that opens in the pressurizing direction and that is situated so as to overlay each other, when viewing the separator and the frame along the pressurizing direction,
the cell further including
a gasket that is disposed on the separator so as to be situated between each of the cells in the stacked state, and that is disposed in a first portion including part of an edge portion of the manifold hole,
the gasket is subjected to pressure in the pressurizing direction in the stacked state, and
the one or more groove portions are provided such that the one or more groove portions are situated in a second portion of the edge portion of the manifold hole, that is part of the edge portion of the manifold hole other than the first portion, when viewing the separator and the frame disposed at the press die along the pressurizing direction.

3. The press die according to claim 2, wherein the one or more groove portions are made up of one groove.
